# EUROPÄISCHE PATENTSCHRIFT

(11) **EP 0 356 658 B1**
(45) Veröffentlichungstag und Bekanntmachung des Hinweises auf die Patenterteilung: **13.01.1993**
(21) Anmeldenummer: 89112418.2
(22) Anmeldetag: 07.07.1989
(51) Int. Cl.: B01J 20/34, B01D 53/02

(54) **Verfahren zur Desorption eines mit Schadstoffen beladenen Adsorptionsmittels und Anlage zur Durchführung des Verfahrens**
Process for the desorption of adsorbents containing harmful substances, and apparatus for carrying out the process
Procédé de désorption d'une matière adsorbante chargée de substances nocives et appareil pour la mise en oeuvre du procédé

(30) Priorität: 02.08.1988 DE 3826237
(43) Veröffentlichungstag der Anmeldung: 07.03.1990
(73) Patentinhaber: Hugo Petersen Ges. für verfahrenstechn. Anlagenbau mbH & Co KG, 65036 Wiesbaden (DE)
(72) Erfinder: Seipenbusch, Jürgen, Dipl.-Ing., D-6200 Wiesbaden (DE); Kotsch, Herbert, D-6056 Heusenstamm (DE)
(74) Vertreter: Carstens, Wilhelm, Dipl.-Phys.

(56) Entgegenhaltungen:
- DE-A- 3 511 766
- US-A- 2 506 552
- US-A- 2 571 380
- US-A- 2 933 454

## Beschreibung

Die Erfindung betrifft zun{chst ein Verfahren der im Oberbegriff des Anspruches 1 genannten Art.

Es ist ein Verfahren bekannt (BMFT-FM-T-81-147) bei dem ein Rωhrendesorber zur Regeneration von Aktivkoks benutzt wird, der in einer Rauchgasentschwefelungsanlage mit Schadstoffen beladen wurde. Im Rωhrendesorber wird die W{rme eines Heißgases durch die Rωhrenwandungen hindurch auf den durch die Rωhren strωmenden festen Koks }bertragen. Da der W{rme}bergang durch die Wandungen der Rωhren hindurch erfolgt, m}ssen die Temperaturen des Heißgass und der Rohrwandung ganz wesentlich }ber der Desorptionstemperatur liegen. Der aus den Rωhren abgezogene Koks wird einer Abk}hlung unterzogen, die durch die indirekte K}hlung des in den Rωhren fließenden Aktivkoks mittels Luft erfolgt.

Aus der DE-OS 35 11 766 ist ein Verfahren bekannt, bei dem die Erw{rmung des Adsorptionsmittels auf Desorptionstemperatur mittels einer Strahlung erfolgt, die von den Kωrnern direkt absorbiert wird. Dabei wird das Adsorptionsmittel nach dem Austreiben der Schadstoffe mit einem im Kreislauf gefahrenen Inertgas gek}hlt, das seinerseits die W{rme }ber einen W{rmetauscher an einem K}hlkreislauf abgibt.

US-A-2 933 454 betriff ein Verfahren zur Reaktivierung eines mit fl}ssigen und/oder festen organischen Schadstoffen beladenen kωrmigen kohlenstoffhaltigen Adsorptionsmittels, wobei dieschadstoffe zhn{dist thermisch gedrackt und entgast werden und danach ein oxidative Dekarbonisation staffindet. Die Erl}tzung des belladenen Adsorptions mittels erfolgt durch Verbrennen von auf der aktiven Kohlenstoffhaltigen Oberfl{che abgeschiedenen nicht fl}chtigen Verbindungen

Weiterhin ist bereits vorgeschlagen worden, daß zu desorbierende Adsorptionsmittel direkt mit einem heißen Inertgas auf Desorptionstemperatur zu bringen.

Die bekannten Verfahren zeichnen sich somit alle dadurch aus, daß w{hrend der gesamten Desorptionszeit von einer externen Quelle Heizenergie zugef}hrt werden muß.

Es ist die Aufgabe der vorliegenden Erfindung ein Verfahren anzugeben, bei dem das Aufbringen externer Heizenergie w{hrend der gesamten Desorptionszeit nicht mehr erforderlich ist.

Diese Aufgabe wird dadurch gelωst, daß dem beladenen Adsorptionsmittel sauerstoffhaltiges Oxidationsgas zugef}hrt wird derart, daß es durch Teiloxidation auf die Desorptionstemperatur erhitzt wird.

Hierbei ist es durchaus mωglich, daß einige Kωrner des kohlenstoffhaltigen Adsorptionsmittels unter Umst{nden auch Flammentemperatur erreichen. Je nach eingesetztem Adsorptionsmittel liegt die Desorptionstemperatur im Bereich von 350 bis 500 °C; der Flammenpunkt liegt im Bereich 550 °C.

Es ist von Vorteil, wenn das Adsorptionsmittel vor der Zufuhr des sauerstoffhaltigen Oxidationsgases vorgew{rmt wird, um die von der Teiloxidation aufzubringende W{rmemenge entsprechend herabsetzten zu kωnnen und die bei der K}hlung des entladenen Adsorptionsmittels freiwerdende W{rmemenge wirtschaftlich einsetzen zu kωnnen.

Das erfindungsgem{ße Verfahren kann mit Vorteil so ausgef}hrt werden, daß das sauerstoffhaltige Oxidationsgas dem Adsorptionsmittel in einem Wanderbett im Gegenstrom zugef}hrt wird. Es ist aber auch mωglich, daß das sauerstoffhaltige Gas dem Adsorptionsmittel in einem Wirbelbett zugef}hrt wird.

Wie bereits vorstehend erw{hnt, kann es zweckm{ßig sein, die beim K}hlen an das K}hlgas abgebene W{rme zum Vorw{rmen des beladenen Adsorptionsmittels mittels eines Vorw{rmgases einzusetzen. Wenn beim Vorw{rmen nicht eine Vorw{rmtemperatur erreicht wird, die schon zu einer zu ber}cksichtigen Desorption f}hrt, kann beim K}hlen erw{rmte Luft direkt zum Vorw{rmen des Adsorptionsmittels eingesetzt wird.

Falls die Temperaturen bei dem Vorw{rmen erreicht werden, die zu einem zu ber}cksichtigen Ausmaß an Desorption f}hren, ist es zweckm{ßig, wenn vom erw{rmten K}hlgas W{rme durch einen W{rmetausch auf das Vorw{rmgas }bertragen wird. K}hlgas und Vorw{rmgas werden dann in geschlossenen Kreisl{ufen gef}hrt.

Falls als K}hlgas Luft verwendet wird, ist es zweckm{ßig, derartige beim K}hlen erw{rmte Luft als sauerstoffhaltiges Oxidationsgas einzusetzen.

Es kann auch zweckm{ßig sein, daß zus{tzlich zum K}hlgas das desorbierte Adsorptionsmittel mit Wasser gek}hlt wird.

Die Erfindung richtet sich auch auf eine Anlage zur Durchf}hrung des erfindungsgem{ßen Verfahrens. Wie beim Stand der Technik ist die Anlage mit einem Vorratsbeh{lter, einer Desorptionsstufe und einer K]hlstufe versehen.

Erfindungsgem{ß ist dabei vorgesehen, daß der Desorbierstufe eine Oxidationsstarteinrichtung, wie z. B. eine Brennkammer, zugeordnet ist und ihr ein sauerstoffhaltiges Oxidationsgas zuf}hrbar ist. Vorzugsweise ist die Desorbierstufe ein Wanderbett oder ein Wirbelbett.

Weiterhin ist es zweckm{ßig, wenn zu Vorw{rmen des zu desorbierenden Adsorptionsmittels aus der K}hlstufe W{rme auf die Vorw{rmstufe }bertragbar ist.

Das erfindungsgem{ße Verfahren und Anlagen sollen nun anhand der beiden beigef}gten Figuren n{her erl{utert werden. Es zeigt:

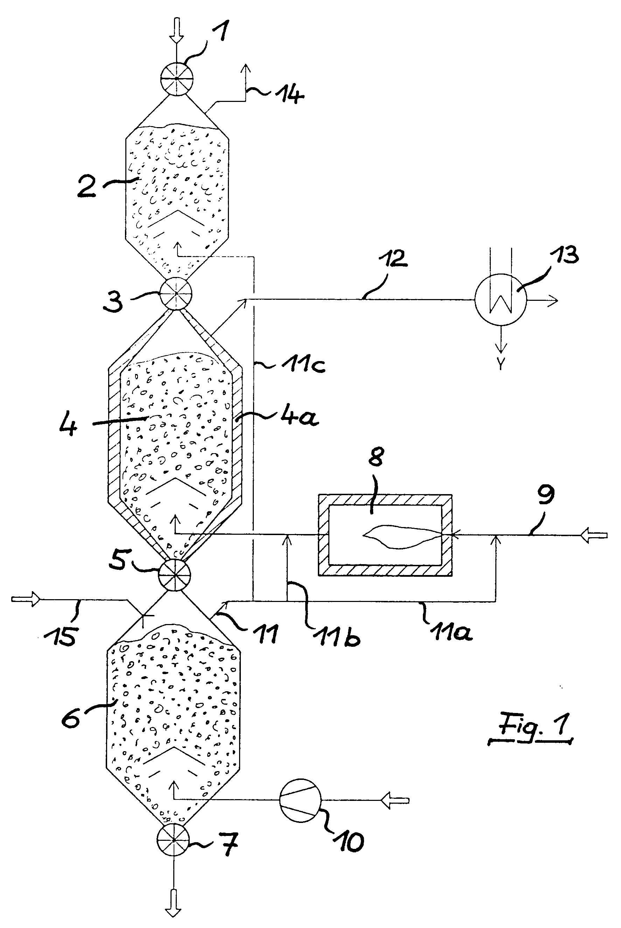

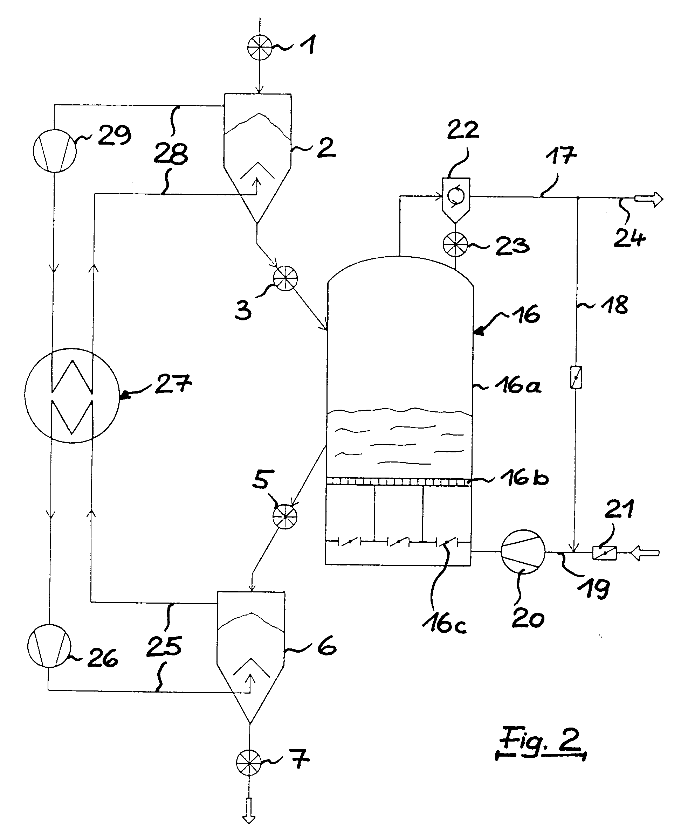

Fig. 1 eine Anlage zur Durchf}hrung des Verfahrens mit einem Wanderbett und Fig 2 eine Anlage zur Durchf}hrung des Verfahrens mit einer Wirbelschicht.

Als kohlenstoffhaltiges Adsorptionsmittel kommen vorzugsweise Antrazit, Aktivkoks, Herdofenkoks, Petrolkoks und/oder Aktivkohle in Frage.

Bei der Anlage gem{ß Fig. 1 wird A-Koks }ber eine Zellradschleuse 1 in einen Vorw{rmer 2 eingebracht. ]ber eine weitere Zellradschleuse 3 wird er einem Wanderbettdesorber 4 zugef}hrt. Aus diesem tritt er }ber eine weitere Zellradschleuse 5 in einen A-Koks-K}hler 6 ein, aus dem er }ber eine vierte Zellradschleuse 7 abgezogen werden kann. Wie aus der Fig. 1 ersichtlich ist, ist der Wanderbettdesorber 4 mit einer Ausmauerung 4a versehen, um ihn gegen die relativ hohe Desorptionstemperatur von ca. 500 °C zu sch}tzen.

Dem Wanderbettdesorber ist eine Brennkammer 8 zugeordnet, der Heizgas }ber Leitung 9 zugef}hrt wird.

Dem Aktivkoksk}hler 6 ist ein Luftgebl{se 10 zugeordnet, das in den unteren Bereich des K}hlers Luft einleitet, die nach oben durch den desorbierten Aktivkoks strωmt und }ber eine Leitung 11 abgezogen wird. ]ber eine Leitung 11a kann von dem Gebl{se 10 gefωrderte Luft als Verbrennungsluft der Brennkammer 8 zugeleitet werden. Die Brennkammer dient dazu, bei Beginn des Betriebs der Anlage dem im Wanderbettdesorber befindlichen Koks in die N{he oder auf Desorptionstemperatur zu erw{rmen. Wenn diese Temperatur erreicht ist, wird die Brennkammer 8 außer Betrieb genommen und }ber Zweitleitung 11b ein Teilstrom der im A-Koks-K}hler 6 erw{rmten Luft der Verbindungsleitung zwischen Brennkammer und Wanderbettdesorber zugeleitet. Diese Luft f}hrt zu einer Teiloxidation des in dem Wanderbettdesorber befindlichen Aktivkokses, so daß dieser auch bei Abschalten der Brennkammer 8 auf die Desorptionstemperatur von ca. 500 °C erhitzt wird.

Das }ber Leitung 11b herangef}hrte sauerstoffhaltige Gas dient gleichzeitig als Sp}lgas f}r die Aufnahme des bei der Desorption gebildeten Gases, das aus SO⁶, CO⁶ und Wasserdampf besteht. Dieses Gasgemisch wird am oberen Ende des Wanderbettdesorbers 4 }ber eine Leitung 12 als SO⁶-Reichgas abgezogen und }ber einen Reichgask}hler 13 abgef}hrt.

]ber eine Zweigleitung 11c wird im K}hler 6 erw{rmte Luft dem Vorw{rmer 2 zugef}hrt, um dort in direktem Kontakt den Aktivkoks auf ca. 200 °C vorzuw{rmen. Bei dieser Temperatur findet noch keine Desorption statt, so daß das Vorw{rmgas ohne Schwierigkeiten }ber Leitung 14 abgezogen werden kann.

Falls die Gegenstromk}hlung mit Luft im K}hler 6 nicht ausreichend ist, kann auf den aus der Zellradschleuse 5 austretenden und in den K}hler 6 eingebrachten Koks noch mit der D}seneinrichtung 15 Wasser aufgespr}ht werden, um den Koks auf ca. 250 bis 300 °C vorzuk}hlen.

Der desorbierte Aktivkoks wird mit einer Temperatur von ca. 50 °C am unteren Ende }ber die Zellradschleuse 7 entnommen.

Die vorstehend beschriebene Verfahrensf}hrung f}hrt also zu einer autothermen Desorption, d. h. eine Desorption ohne Zufuhr {ußerer Heizenergie, wobei selbstverst{ndlich zum Start der Desorption Heizenergie aufgebracht werden muß, da die W{rme freisetzende Teiloxidation noch nicht bei kaltem Koks einsetzt.

Die Fig. 2 zeigt eine Anlage zu autothermen Desorption, bei der der Desorber nicht als Wanderbettdesorber sondern als Wirbelschichtdesorber 16 ausgebildet ist. Zum Wirbelschichtdesorber 16 gehωrt ein Beh{lter 16a, in dem sich ein D}senboden 16b erstreckt, der von unten }ber Klappen 16c geregelt mit einem }ber Leitungen 17, 18 und 19 mittels eines Gebl{ses 2o im Kreislauf gef}hrten Kreislaufgas beaufschlagt wird. Die zur Teiloxidation benωtigte Luft wird dem Kreislaufgas }ber eine Leitung 21 geregelt vor Eintritt des Kreislaufgases in die Wirbelschicht zugemischt. In der Leitung 17 (Austritt des Kreislaufgases aus der Wirbelschicht) ist ein Staubabscheider 22 angeordnet, mit dessen Hilfe das Kreislaufgas entstaubt wird. Der anfallende Staub wird in den Beh{lter 16a }ber eine Zellradschleuse 23 zur}ckgef}hrt. ]ber Leitung 24 wird das durch die Desorption erzeugte Reichgas dem Kreislauf entnommen und zu einer Weiterverarbeitungseinrichtung gef}hrt.

In dem K}hler 6 wird der Koks mittels eines }ber eine Kreislaufleitung 25 und einem Gebl{se 6 im Kreislauf gefahrenen Gas direkt im Gegenstrom gek}hlt.

In dem K}hler 6 wird der Koks mittels eines }ber eine Kreislaufleitung 25 und einem Gebl{se 6 im Kreislauf gefahrenen Gases direkt im Gegenstrom gek}hlt.

In die Kreislaufleitung 25 ist ein W{rmetauscher 27 eingeschaltet, dessen anderer Strang von einer Kreislaufleitung 28 gebildet wird, die zusammen mit einem in ihr liegenden Gebl{se 29 einen Vorw{rmgaskreislauf f}r den Vorw{rmer 2 bildet.

Diese Anordnung wird beispielsweise gew{hlt, wenn bereits eine so hohe Vorw{rmung erreicht wird, daß zumindest ein Teil der Schadstoffe desorbiert wird. Die Trennung durch den W{rmetauscher 27 verhindert dann, daß desorbierte Schadgase beim K}hlen wieder auf den Aktivkoks aufgebracht werden.

Auch bei dem Wirbelschichtdesorber wird durch die Teiloxidation bzw. Teilverbrennung die Desorptionstemperatur erreicht, d. h. es erfolgt eine autotherme Desorption.

Falls bei den Ausf}hrungsformen gem{ß Figuren 1 und 2 im Aktivkoksk}hler 6 noch nicht die Lagertemperatur erreicht wird, kann noch ein nicht dargestellter Schlußk}hler nachgeschaltet sein.

## Patentansprüche

1. Verfahren zur Desorption eines mit Schadstoffen beladenen kωrnigen kohlenstoffhaltigen Adsorptionsmittels, insbesondere mit Schwefeloxiden und/oder Stickstoffoxiden aus Rauchgasen beladenen Aktivkokses, durch Erw{rmung des Adsoptionsmittels auf Desorptionstemperatur, Sammeln der desorbierten gasfωrmigen Schadstoffe und anschließendem K}hlen des desorbierten Adsorptionsmittels, **dadurch gekennzeichnet,** daß dem beladenen Adsorptionsmittel sauerstoffhaltiges Oxidationsgas zugef}hrt wird derart, daß es durch Teiloxidation auf die Desorptionstemperatur erhitzt wird.

2. Verfahren nach Anspruch 1, **dadurch gekennzeichnet,** daß das Adsorptionsmittel vor Zufuhr des sauerstoffhaltigen Oxidationsgases vorgew{rmt wird.

3. Verfahren nach Anspruch 1 oder 2, **dadurch gekennzeichnet,** daß das sauerstoffhaltige Oxidationsgas dem Adsorptionsmittel in einem Wanderbett im Gegenstrom zugef}hrt wird.

4. Verfahren nach Anspruch 1 oder 2, **dadurch gekennzeichnet,** daß das sauerstoffhaltige Oxidationsgas dem Adsorptionsmittel in einem Wirbelbett zugef}hrt wird.

5. Verfahren nach einem oder mehreren der Anspr}che 1 bis 4 **dadurch gekennzeichnet,** daß die beim K}hlen an das K}hlgas abgebene W{rme zum Vorw{rmen des beladenen Adsorptionsmittels mittels eines Vorw{rmgases eingesetzt wird.

6. Verfahren nach einem oder mehreren der Anspr}che 1 bis 5 **dadurch gekennzeichnet,** daß beim K}hlen erw{rmte Luft direkt zum Vorw{rmen des Adsorptionsmittels eingesetzt wird.

7. Verfahren nach einem oder mehreren der Anspr}che 1 bis 6 **dadurch gekennzeichnet,** daß vom erw{rmten K}hlgas W{rme durch einen W{rmetausch auf das Vorw{rmgas }bertragen wird.

8. Verfahren nach einem oder mehreren der Anspr}che 1 bis 7 **dadurch gekennzeichnet,** daß beim K}hlen erw{rmte Luft als sauerstoffhaltiges Oxidationsgas eingesetzt wird.

9. Verfahren nach einem oder mehreren der Anspr}che 1 bis 8 **dadurch gekennzeichnet,** daß zus{tzlich zum K}hlgas das desorbierte Adsorptionsmittel mit Wasser gek}hlt wird.

10. Anlage zur Durchf}hrung des Verfahrens nach einem oder mehreren der Anspr}che 1 bis 9 mit einem Vorratsbeh{lter, einer Desorptionsstufe und einer K}hlstufe, **dadurch gekennzeichnet,** daß der Desorbierstufe (4; 16) eine Oxidationsstarteinrichtung (8) zugeordnet ist, und ihr ein sauerstoffhaltiges Oxidationsgas (11b; 21) zuf}hrbar ist.

11. Anlage nach Anspruch 10, **dadurch gekennzeichnet,** daß die Desorbierstufe ein Wanderbett (4) ist.

12. Anlage nach Anspruch 10, **dadurch gekennzeichnet,** daß die Desorbierstufe ein Wirbelbett (16) ist.

13. Anlage nach einem oder mehreren der Anspr}che 10 bis 12 **dadurch gekennzeichnet,** daß zum Vorw{rmen des zu desorbierenden Adsorptionsmittels aus der K}hlstufe (6) W{rme auf die Vorw{rmstufe }bertragbar ist.

## Claims

1. A process for the desorption of a particulate carbonaceous adsorption agent laden with noxious material, especially of activated coke laden with sulfur dioxide and/or nitrogen oxides, by heating the adsorption agent onto desorption temperature, collecting the desorbed gaseous noxious material and subsequent cooling of the desorbed adsorption agent, characterized in that an oxygen-containing oxidation gas is supplied to the laden adsorption agent in such a manner that it is heated by partial oxidation onto the desorption temperature.

2. The process according to claim 1, characterized in that the adsorption agent is preheated before supply of the oxygen-containing oxidation gas.

3. The process according to claim 1 or 2, characterized in that the oxygen-containing oxidation gas is supplied to the adsorption agent in a moving bed in countercurrent flow.

4. The process according to claim 1 or 2, characterized in that the oxygen-containing oxidation gas is supplied to the adsorption agent in a fluidized bed.

5. The process according to one or more of the claims 1 to 4, characterized in that the heat transferred to the cooling gas during cooling is used for preheating the laden adsorption agent by means of a preheating gas.

6. The process according to one or more of the claims 1 to 5, characterized in that air preheated during cooling is directly used for preheating of the adsorption agent.

7. The process according to one or more of the claims 1 to 6, characterized in that heat is transferred from the heated cooling gas by heat exchange to the preheating gas.

8. The process according to one or more of the claims 1 to 7, characterized in that air heated during cooling is used as the oxygen-containing oxidation gas.

9. The process according to one or more of the claims 1 to 8, characterized in that additionally to the cooling gas the desorbed adsorption agent is cooled with water.

10. Plant for performing the process according to one or more of the claims 1 to 9 with a supply container, a desorption stage and a cooling stage, characterized in that oxidation starting means (8) are associated to the desorbing stage (4; 16) and the oxidation starting means (82) may be supplied with an oxygen-containing oxidation gas (11b; 21).

11. The plant according to claim 10, characterized in that the desorbing stage is a moving bed (4).

12. The plant according to claim 10, characterized in that the desorbing stage is a fluidized bed (16).

13. The plant according to one or more of the claims 10 to 12, characterized in that for the preheating of the adsorption agent to be desorbed heat from the cooling stage (6) is transferable to the preheating stage.

## Revendications

1. Procédé pour assurer la désorption d'un adsorbant carboné granulaire chargé de matières toxiques, en particulier d'un adsorbant en coke activé chargé d'oxydes de soufre et/ou d'oxydes d'azote provenant de gaz brûlés, procédé comprenant le chauffage de l'adsorbant pour l'amener à sa température de désorption, le rassemblement des matières toxiques libérées à l'état gazeux par la désorption, puis le refroidissement de l'adsorbant ayant subi la désorption, caractérisé en ce que l'on incorpore du gaz oxydant oxygénè à l'adsorbant chargé, de façon à atteindre la température de désorption par oxydation partielle.

2. Procédé selon la revendication 1, caractérisé en ce que l'on assure un préchauffage de l'adsorbant avant d'introduire le gaz oxydant oxygéné.

3. Procédé selon la revendication 1 ou 2, caractérisé en ce que l'incorporation du gaz oxydant oxygéné à l'adsorbant est réalisée à contre-courant dans un lit en mouvement.

4. Procédé selon la revendication 1 ou 2, caractérisé en ce que l'incorporation du gaz oxydant oxygéné à l'adsorbant est rèalisèe dans un lit fluidifié.

5. Procédé selon une ou plusieurs des revendications 1 à 4, caractérisé en ce que l'on utilise la chaleur cédée au gaz de refroidissement, lors du refroidissement, pour préchauffer, à l'aide d'un gaz de préchauffage, l'adsorbant chargé.

6. Procédé selon une ou plusieurs des revendications 1 à 5, caractérisé en ce que l'on utilise directement l'air chauffé lors du refroidissement pour préchauffer l'adsorbant.

7. Procédé selon une ou plusieurs des revendications 1 à 6, caractérisé en ce que le gaz de refroidissement qui s'est réchauffé transmet de la chaleur au gaz de préchauffage par un échangeur de chaleur.

8. Procédé selon une ou plusieurs des revendications 1 à 7, caractérisé en ce que l'on utilise l'air chauffé lors du refroidissement comme gaz d'oxydation oxygéné.

9. Procédé selon une ou plusieurs des revendications 1 à 8, caractérisé en ce que, en plus d'être refroidi par le gaz de refroidissement, l'adsorbant ayant subi la désorption est refroidi par de l'eau.

10. Installation pour mettre en oeuvre le procédé selon une ou plusieurs des revendications 1 à 9 et comportant un réservoir, un ètage de désorption et un étage de refroidissement, caractérisé en ce qu'un dispositif (8) conçu pour amorcer l'oxydation est associé à l'étage de désorption (4 ; 16) et en ce que cet étage peut être alimenté en gaz d'oxydation oxygéné (11b ; 21).

11. Installation selon la revendication 10, caractérisé en ce que l'ètage de désorption est un lit en mouvement (4).

12. Installation selon la revendication 10, caractérisé en ce que l'étage de désorption est un lit fluidifié (16).

13. Installation selon une ou plusieurs des revendications 10 à 12, caractérisé en ce que la chaleur provenant de l'étage de refroidissement (6) peut être transmise à l'étage de préchauffage pour assurer le préchauffage de l'adsorbant qui doit subir la désorption.
